# FASCICULE DE BREVET EUROPEEN

(11) **EP 4 241 201 B1**
(45) Date de publication et mention de la délivrance du brevet: **12.02.2025**
(21) Numéro de dépôt: 21806697.5
(22) Date de dépôt: 04.11.2021
(51) Int. Cl.: G06K 13/08

(54) **DISPOSITIF DE TRANSACTION ÉLECTRONIQUE COMPRENANT UN MÉCANISME DE PROTECTION CONTRE L'INSERTION D'UN OBJET NON CONFORME DANS LE LECTEUR DE CARTE À PUCE**
ELEKTRONISCHE TRANSAKTIONSVORRICHTUNG MIT EINEM MECHANISMUS ZUM SCHUTZ GEGEN DAS EINFÜHREN EINES NICHTKONFORMEN OBJEKTS IN DEN CHIPKARTENLESER
ELECTRONIC TRANSACTION DEVICE COMPRISING A MECHANISM AFFORDING PROTECTION AGAINST THE INSERTION OF A NON-COMPLIANT OBJECT INTO THE CHIP CARD READER

(30) Priorité: 04.11.2020 FR 2011292
(43) Date de publication de la demande: 13.09.2023
(73) Titulaire: Banks and Acquirers International Holding, 75015 Paris (FR)
(72) Inventeur: YERNAUX, Olivier, 26100 ROMANS-SUR-ISERE (FR)
(74) Mandataire: LLR
(86) Numéro de dépôt international: PCT/EP2021/080690
(87) Numéro de publication internationale: WO 2022/096606

(56) Documents cités:
- WO-A1-2015/181875
- WO-A1-2017/073463
- JP-A- 2000 099 637

## Description

### Domaine de l'invention

La présente technique se rapporte au domaine des dispositifs de transaction électronique tels que des terminaux de paiement électronique, des distributeurs automatiques de billets ou des bornes de paiement automatiques mises en œuvre, par exemple, dans des parkings, des distributeurs de boisson, des stations de lavage, des stations à essences ou des bornes d'achat de tickets de transport.

Plus particulièrement, la présente technique concerne de tels dispositifs de transaction qui sont installés en extérieur et/ou sans surveillance.

Plus particulièrement encore, la présente technique concerne la protection de ces dispositifs contre l'insertion d'objet non conforme ou de corps étranger dans le lecteur de carte à puce de ces dispositifs.

### Art antérieur

On connait les dispositifs de transaction électroniques dit « en accès libre » qui permettent à un utilisateur de retirer de l'argent auprès d'un distributeur automatique de billets ou bien d'effectuer une transaction de manière autonome sur une borne de paiement, par exemple sur un distributeur de boisson ou une borne d'achat de tickets de transport ou bien même dans une station de lavage ou une station essence.

Ces dispositifs de transaction électronique en libre accès sont généralement installés en extérieur et ne sont pas surveillés par une présence humaine. Par conséquent, il n'est pas rare que ces dispositifs de transaction électronique soient mis hors service du fait d'une action de vandalisme ou bien du fait d'une mauvaise utilisation du dispositif.

Plus précisément, il n'est pas rare que des objets non conformes soient insérés dans la fente d'introduction de la carte à puce, ou carte de paiement. Par exemple, des tickets de métros ou de parkings, des pièces de monnaie, des demi cartes et mêmes des bâtonnets mélangeurs (« touillettes » à café) sont régulièrement logés/introduits dans la fente du dispositif de transaction électronique entrainant donc la mise hors service de ce dernier.

Pour tenter de remédier à ce problème, il a été mis en œuvre, sur les distributeurs automatiques de billets, un volet d'obturation extérieur qui empêche toute introduction d'objet dans la fente.

Plus précisément, ce volet extérieur ne s'ouvre que lorsque l'introduction de la carte de paiement est nécessaire pour réaliser la transaction. En d'autres termes, ce volet extérieur est commandé électroniquement par le dispositif de transaction, au moment où l'insertion d'une carte de paiement est requise pendant une transaction électronique.

Cette solution, bien que relativement complexe à mettre en œuvre puisqu'elle nécessite un pilotage électronique, s'avère efficace pour empêcher l'introduction d'un objet non souhaité dans la fente lorsque le dispositif de transaction n'est pas utilisé (volet fermé). Néanmoins, cette solution présente l'inconvénient de ne pas empêcher l'introduction d'un objet non conforme dans la fente lorsque le volet est ouvert au moment de l'attente de l'introduction de la carte de paiement. En effet, le volet étant ouvert, un objet non conforme peut être inséré dans la fente.

Cette solution n'est donc pas entièrement satisfaisante.

WO 2015/181875 divulgue un dispositif de transaction électronique comprenant un lecteur de carte à puce et un mécanisme d'obturation ayant des caractéristiques selon le préambule de la revendication 1.

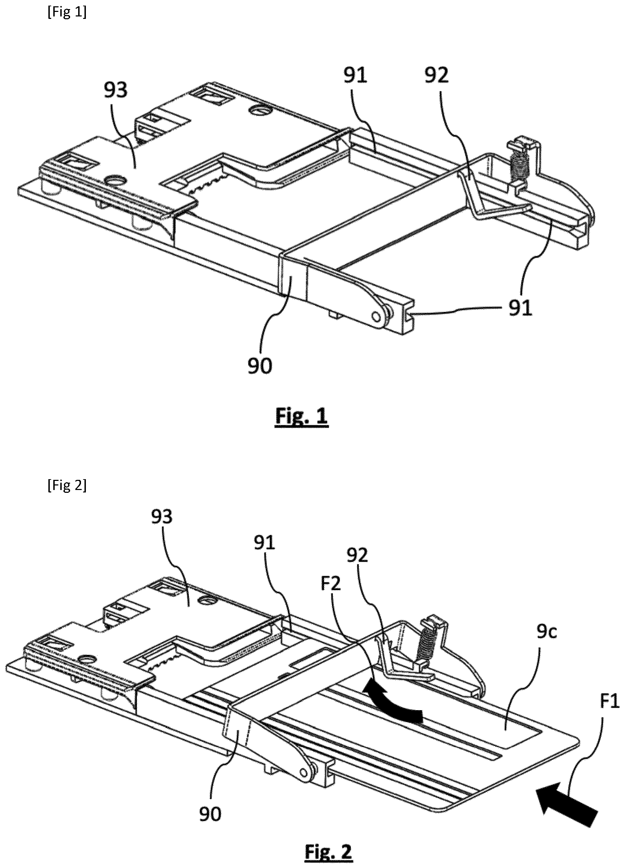

Une autre solution de l'état de la technique, connue depuis plus de quinze ans et illustrée sur les figures 1 et 2, consiste à mettre en œuvre un mécanisme d'obturation exclusivement mécanique qui comprend un volet d'obturation 90 situé sensiblement au milieu de la fente 91, dans le sens longitudinal de l'introduction d'une carte jusqu'au lecteur de carte. Ce volet d'obturation 90 ne s'ouvre que lorsque l'objet 9c introduit dans la fente 91 actionne une came 92 entrainant le déplacement du volet 90. En d'autres termes, et comme illustré sur la figure 2, lorsqu'un objet 9c est introduit (suivant la flèche F1) dans la fente 91, ce dernier entraine un déplacement en rotation de la came 92 qui engendre l'ouverture du volet d'obturation 90 (suivant la flèche F2). De manière générale, la came 92 est située à proximité d'un bord de la fente 91, comme illustré.

Cette solution mécanique est relativement simple à mettre en œuvre. Toutefois, un inconvénient de cette solution réside dans le fait que le volet s'ouvre dès qu'un objet actionne la came. En d'autres termes, cette solution ne permet pas de différencier les cartes de paiement des objets non conformes tels que les tickets de parking ou de métro, les demi cartes ou bien les « touillettes » à café.

En effet, cette solution ne permet pas de détecter si l'objet inséré présente des dimensions (largeur et épaisseur notamment) conformes/correspondantes à celle d'une carte de paiement de sorte à empêcher l'insertion d'un objet non conforme.

Par conséquent, si un objet non conforme est inséré et actionne la came, le volet s'ouvre. En position ouverte du volet, l'objet inséré et/ou d'autres objets, peuvent être introduits dans la fente et ainsi bloquer le lecteur de carte 93. Le dispositif de transaction électronique est alors hors de service et une intervention de maintenance est donc nécessaire pour remettre le dispositif de transaction en état de fonctionnement.

Cette solution, bien que simple à mettre en œuvre, n'est donc pas satisfaisante.

Il existe donc un besoin de fournir une solution de protection contre l'insertion d'un objet conforme dans le lecteur de carte à puce d'un dispositif de transaction électronique qui soit simple à mettre en œuvre et qui permette, selon au moins un mode de réalisation, de remédier au moins en partie aux inconvénients des solutions de l'état de la technique.

### Résumé de l'invention

La technique proposée permet de résoudre au moins certains des problèmes de l'art antérieur. Plus particulièrement, la présente technique se rapporte à un dispositif de transaction électronique selon la revendication 1.

La technique proposée permet donc notamment d'empêcher l'ouverture des volets si l'objet introduit ne présente pas une largeur conforme à la largeur d'une carte à puce standard, du fait du positionnement des éléments d'actionnement des volets de part et d'autre de la fente, près des rails latéraux de guidage de celle-ci. En d'autres termes, la technique proposée permet de détecter la bonne largeur de l'objet introduit. Cette disposition particulière des éléments d'actionnement nécessite donc l'introduction d'un objet les actionnant simultanément pour que les volets s'ouvrent, permettant ainsi l'introduction de l'objet plus loin dans la fente. Si les deux éléments d'actionnement ne sont pas actionnés tous les deux, alors les deux volets ne s'ouvrent pas, de sorte à empêcher l'introduction d'un objet qui ne serait pas conforme.

Selon un aspect particulier de la présente technique, les éléments d'actionnement sont mis en œuvre en opposition l'un par rapport à l'autre selon un plan horizontal de la fente, le premier volet se déplaçant de la position fermée vers la position ouverte selon une première direction et le deuxième volet se déplaçant de la position fermée vers la position ouverte selon une deuxième direction, opposée à la première direction.

Le positionnement inversé des éléments d'actionnement des deux volets, par rapport à un plan horizontal, permet l'ouverture des volets d'obturation dans des directions opposées. Plus particulièrement, cette ouverture dans des sens opposés des volets d'obturation entraine une introduction inclinée d'un objet non conforme en épaisseur notamment, de sorte à empêcher son avancement dans la fente du fait de l'ouverture partielle des volets.

Selon un aspect particulier, les éléments d'actionnement se présentent sous la forme d'une première came d'actionnement et d'une deuxième came d'actionnement respectivement solidaires des premier et deuxième volets d'obturation.

La mise en œuvre d'éléments d'actionnement se présentant sous la forme de cames solidaires des volets d'obturation est relativement simple et efficace. En effet, une telle mise en œuvre avec des cames permet de ne pas opposer une trop grande résistance lors de l'introduction d'une carte à puce, de manière à ne pas dégrader l'ergonomie pour l'utilisateur, tout en permettant une détection précise d'un objet non conforme.

Selon un autre aspect, la course de déplacement des volets d'obturation est fonction de l'épaisseur de la carte à puce introduite ou de l'objet non conforme introduit.

En d'autres termes le déplacement des volets d'obturation est fonction de l'angle de déplacement des cames d'actionnement. Par conséquent, si l'objet introduit ne présente pas une épaisseur suffisante, alors les volets ne s'ouvrent pas suffisamment/entièrement, de sorte à empêcher l'introduction d'un objet non conforme dans la fente.

Selon encore un autre aspect, les deux volets d'obturation prennent leur position ouverte lorsque les éléments d'actionnement sont actionnés simultanément et selon un angle de déplacement prédéterminé.

Ainsi, il faut que les deux cames d'actionnement soient actionnées en même temps et avec un objet d'une épaisseur suffisante pour permettre l'ouverture des volets d'obturation. Dans les autres cas, la fente n'est pas suffisamment libérée pour permettre l'introduction d'un objet.

Selon un aspect particulier, les volets d'obturation comprennent chacun un ressort de rappel.

De cette manière, les volets d'obturation sont maintenus en position fermée lorsqu'aucune carte à puce n'est introduite dans la fente. De plus, lors du retrait de la carte à puce ou d'un objet non conforme, les volets d'obturation retrouvent automatiquement leur position fermée. Enfin, la présence de ces ressorts permet de renforcer l'effet de l'antagonisme d'ouverture des volets, en maintenant également un effort antagoniste sur chaque came de manière à ne pas permettre l'introduction d'un objet non conforme de largeur sensiblement identique à celle d'une carte à puce mais d'épaisseur plus faible, ou de rigidité plus faible, qu'une carte à puce.

Selon un autre aspect particulier, la fente présente des dimensions sensiblement identiques aux dimensions standards d'une carte à puce.

Ainsi, la fente empêche l'introduction d'un objet non conforme qui présenterait une largeur et/ou une épaisseur supérieure à celles de la fente.

### Liste des Figures

La technique proposée, ainsi que les différents avantages qu'elle présente, seront plus facilement compris à la lumière de la description qui va suivre d'un mode de réalisation illustratif et non limitatif de celle-ci, et des dessins annexés parmi lesquels :
[Fig 1] illustre une vue en perspective d'une solution d'obturation d'une fente d'introduction d'une carte à puce selon l'art antérieur ;
[Fig 2] illustre une autre vue en perspective de la solution de la figure 1 dans laquelle une carte à puce est insérée dans le lecteur de carte à puce ;
[Fig 3] illustre une vue en perspective du mécanisme d'obturation d'une fente d'introduction d'une carte à puce selon la technique proposée ;
[Fig 4] illustre une autre vue en perspective du mécanisme d'obturation d'une fente d'introduction d'une carte à puce selon la technique proposée ;
[Fig 5] illustre une vue en perspective et du dessus du mécanisme d'obturation de la figure 3 montrant une carte à puce introduite dans la fente ;
[Fig 6] illustre une vue en perspective et du dessous du mécanisme d'obturation de la figure 3 montrant une carte à puce introduite dans la fente ;
[Fig 7] illustre une vue en perspective et du dessus du mécanisme d'obturation de la figure 3 montrant une tentative d'introduction d'un ticket de métro dans la fente ;
[Fig 8] illustre une vue en perspective et du dessous du mécanisme d'obturation de la figure 3 montrant une tentative d'introduction d'un ticket de métro dans la fente ;
[Fig 9] illustre une vue en perspective et du dessus du mécanisme d'obturation de la figure 3 montrant une tentative d'introduction d'un ticket de parking dans la fente ;
[Fig 10] illustre une vue de face du mécanisme d'obturation de la figure 9 ;
[Fig 11] illustre une vue partielle et de face du mécanisme d'obturation de la figure 9 ;
[Fig 12] illustre une vue partielle et en perspective du mécanisme d'obturation de la figure 9 ; et
[Fig 13] illustre une vue partielle et de côté du mécanisme d'obturation de la figure 9.

### Description détaillée de l'invention

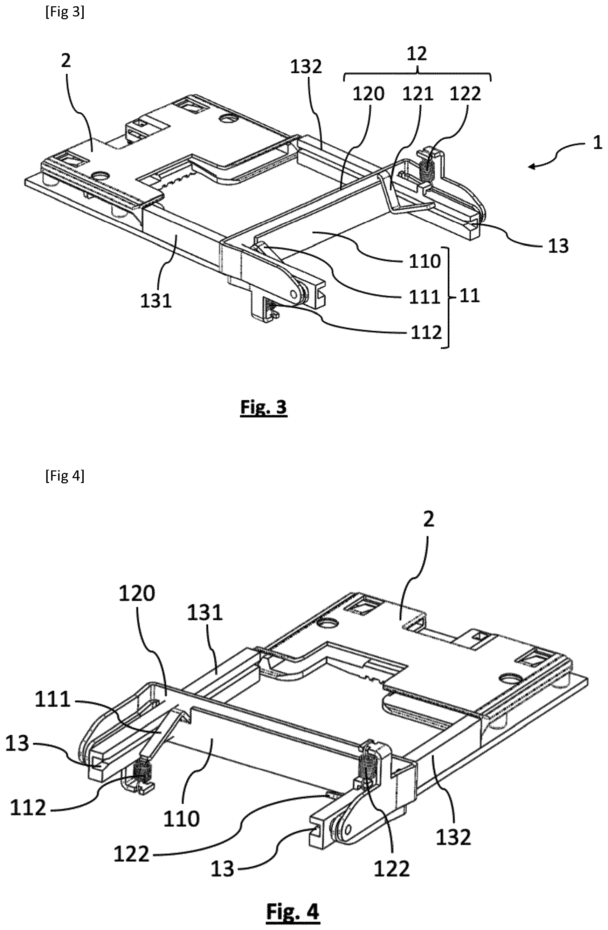

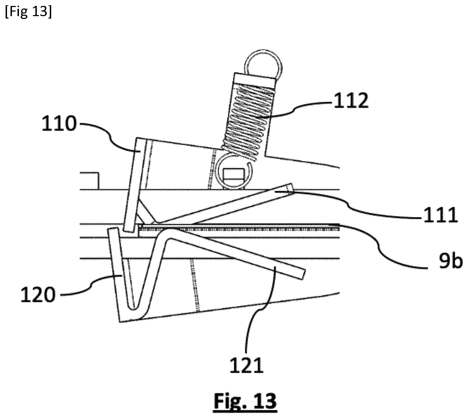

On illustre par la suite un mode de réalisation de la technique proposée, traité à titre de simple exemple illustratif, et non limitatif, à l'appui des figures 3 à 13.

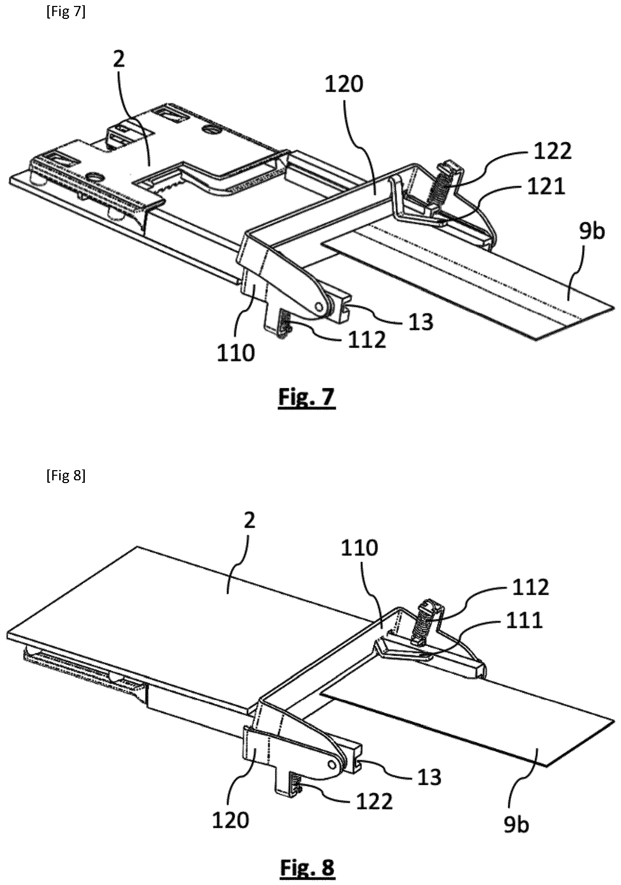

Le terme « objet 9 » fait référence par la suite à un objet que l'on tente d'introduire dans la fente du dispositif de transaction électronique et pouvant être une carte à puce ou un objet non conforme. Le terme « objet non conforme », référencé 9b, regroupe par la suite tout objet différent d'une carte à puce, elle-même référencée 9a. Dans les exemples illustrés sur les figures 7 à 10, l'objet non conforme 9b se présente sous la forme d'un ticket de métro ou d'un ticket de parking.

Les **figures 3 à 6** illustrent un dispositif de transaction électronique selon la technique proposée comprenant un lecteur de carte à puce 2, une fente d'introduction d'une carte à puce 13, formée notamment par deux rails latéraux 131, 132 (gauche et droite) permettant le guidage de la carte à puce 9a jusqu'au lecteur de carte 2, et un mécanisme 11, 12 d'obturation de la fente 13 visant à protéger contre l'insertion d'un corps étranger (ou d'un objet non conforme) dans le lecteur de carte à puce.

Le mécanisme d'obturation de la fente 13 comprend un premier ensemble, ou ensemble avant, d'obturation 11 et un deuxième ensemble, ou ensemble arrière, d'obturation 12. Chacun de ces ensembles comprend un volet d'obturation, un élément d'actionnement et un ressort de rappel. Le mécanisme a pour but d'obturer la fente 13 de sorte à empêcher l'introduction d'un objet non conforme 9b dans la fente jusqu'au lecteur de carte à puce 2.

De cette manière, le risque pour qu'un objet non conforme 9b soit introduit dans le lecteur de carte à puce 2 du dispositif de transaction 1 et mette hors service ce dernier est limité. Le dispositif de transaction 1 est donc maintenu en état de fonctionnement et les interventions de maintenances sont diminuées.

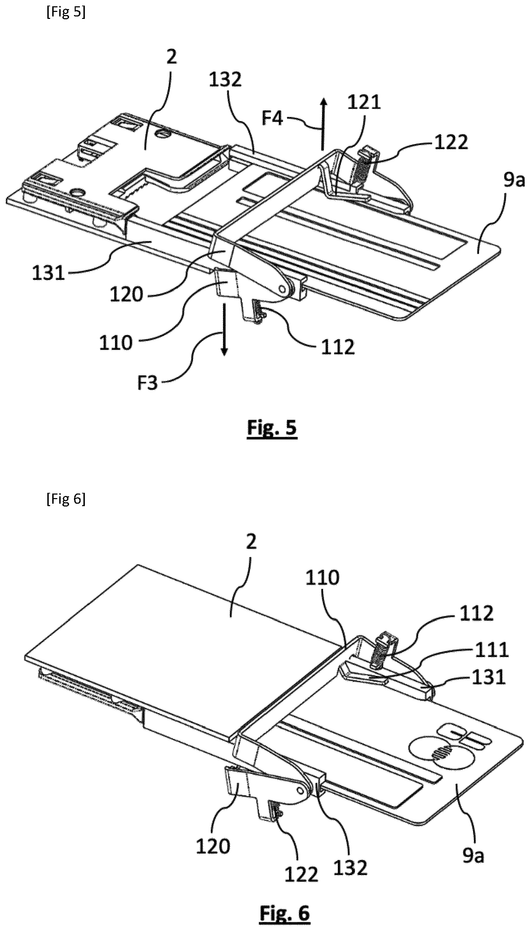

Plus précisément, l'ensemble avant 11 comprend un premier volet d'obturation 110, dit volet avant, monté mobile en rotation par rapport à la fente 13 entre une position fermée (illustrée sur la figure 3) obturant la fente 13 et empêchant l'introduction d'un objet non conforme 9b dans la fente 13, et une position ouverte (illustrée sur la figure 5) libérant la fente 13 et permettant l'insertion d'une carte à puce 9a.

Un premier élément d'actionnement 111, se présentant selon ce mode de réalisation sous la forme d'une première came d'actionnement, située à proximité d'un des rails de guidage de la fente 13, est solidaire du volet avant 110 et permet d'entrainer en rotation le volet avant 110 de la position fermée vers la position ouverte lorsqu'un objet 9 l'actionne. Dans cet exemple, la première came d'actionnement 111 est située à proximité du rail de guidage 131 (à gauche de la fente 13 sur les figures 3, 4, 10 et 11 notamment).

Lorsqu'un objet 9 est introduit dans la fente 13, il entre en contact avec la première came d'actionnement 111. L'avancement de l'objet 9 dans la fente 13 entraine alors un déplacement en rotation de la première came d'actionnement 111, entrainant ainsi une rotation du volet avant 110 de la position fermée à la position ouverte de sorte à libérer totalement l'accès de la fente 13 (si le volet arrière 120 est lui aussi libéré, comme décrit ci-dessous).

L'ensemble avant 11 comprend en outre un ressort de rappel 112, solidaire du volet avant 110 et qui travaille en traction de sorte à maintenir le volet avant 110 en position fermée lorsqu'aucun objet n'actionne la première came d'actionnement 111.

Ainsi, le volet avant 110 est maintenu en position fermée afin d'empêcher l'introduction d'un objet dans la fente 13 jusqu'au lecteur de carte 2 tant que la première came d'actionnement 111 n'est pas actionnée. C'est donc l'actionnement de la première came d'actionnement 111 qui permet de déplacer le volet avant 110 à l'encontre de/malgré la force de traction du ressort de rappel 112. Un objet 9b n'actionnant pas la première came d'actionnement 111 (comme illustré par exemple sur la figure 7) viendrait donc buter directement contre le volet avant 110.

Le ressort de rappel 112 a également pour effet de renforcer la détection d'un objet non conforme 9b de trop faible épaisseur comme décrit ci-après.

Par exemple, sur la vue de la figure 5, le volet avant 110 de l'ensemble avant 11 s'ouvre en se déplaçant/pivotant vers le bas, comme illustré par la flèche F3.

L'ensemble arrière 12 présente la même structure et le même fonctionnement que l'ensemble avant 11. L'ensemble arrière 12 est toutefois disposé/monté de manière symétrique au plan horizontal de la fente 13. Ainsi, contrairement au volet avant 110 qui s'ouvre vers le bas sur la vue de la figure 5 par exemple, le volet arrière 120 s'ouvre vers le haut selon la flèche F4 de la figure 5 notamment.

Plus précisément, l'ensemble arrière 12 comprend un deuxième volet d'obturation, dit volet arrière, 120 monté mobile en rotation par rapport à la fente 13 entre une position fermée (illustrée sur la figure 3) obturant la fente 13 et une position ouverte (illustrée sur la figure 5) libérant la fente 13 et permettant l'insertion d'une carte puce 9a.

Un deuxième élément d'actionnement 121, se présentant selon ce mode de réalisation sous la forme d'une deuxième came d'actionnement, située à proximité de l'autre rail de guidage 132 de la fente 13, est solidaire du volet arrière 120 et permet d'entrainer en rotation le volet arrière 120 de la position fermée vers la position ouverte lorsqu'un objet 9 l'actionne. Dans cet exemple, la deuxième came d'actionnement 121 est donc située à proximité du bord/rail de guidage opposé à la première came d'actionnement 111, c'est-à-dire à proximité du rail de guidage droit 132 de la fente 13 (sur les figures 3, 5, 7, 9, 10 et 11 notamment).

Lorsqu'un objet 9 est introduit dans la fente 13, il entre en contact avec la deuxième came d'actionnement 121. L'avancement de l'objet 9 dans la fente 13 entraine alors un déplacement en rotation de la deuxième came d'actionnement 121, entrainant ainsi une rotation du volet arrière 120 de la position fermée à la position ouverte de sorte à libérer totalement l'accès de la fente 13 (si le volet avant 110 est lui aussi libéré, comme décrit ci-dessus).

L'ensemble arrière 12 comprend en outre un ressort de rappel 122, solidaire du volet arrière 120 et qui travaille en traction de sorte à maintenir le volet arrière 120 en position fermée lorsqu'aucun objet n'actionne la deuxième came d'actionnement 121.

Ainsi, le volet arrière 120 est maintenu en position fermée afin d'empêcher l'introduction d'un objet 9 dans la fente 13 jusqu'au lecteur de carte 2 tant que la deuxième came d'actionnement 121 n'est pas actionnée. C'est donc l'actionnement de la deuxième came d'actionnement 121 qui permet de déplacer le volet arrière 120 à l'encontre de/malgré la force de traction du ressort de rappel 122. Un objet 9b n'actionnant pas la deuxième came d'actionnement 121 (comme illustré par exemple sur la figure 7) ne pourrait donc pas atteindre le lecteur de carte à puce 2.

Le ressort de rappel 122 a également pour effet de renforcer la détection d'un objet non conforme 9b de trop faible épaisseur comme décrit ci-après.

Il est à noter que les volets d'obturation 110, 120 sont solidaires des cames d'actionnement 111, 121 et que ce sont donc les cames d'actionnement 111, 121 qui commandent le déplacement des volets d'obturations 110, 120.

Plus précisément, la course de déplacement des volets d'obturation 110, 120 est fonction de l'épaisseur de l'objet 9 introduit. En d'autres termes, le déplacement des volets d'obturation 110, 120 est fonction de l'angle de déplacement des cames d'actionnement 111, 121.

Ainsi, si l'objet 9 introduit ne présente pas une épaisseur suffisante, c'est-à-dire une épaisseur conforme à l'épaisseur d'une carte à puce 9a, alors les cames d'actionnement 111, 121 ne se déplaceront pas selon un angle prédéterminé suffisant pour que les volets d'obturation 110, 120 s'ouvrent suffisamment pour permettre l'introduction d'un objet 9 dans la fente.

Pour résumer, si une carte à puce 9a est introduite dans la fente 13, alors les cames d'actionnement 111, 121 vont pivoter selon un angle de déplacement égal à un angle de déplacement prédéterminé calculé selon l'épaisseur standard d'une carte à puce 9a (par exemple entre 0,68 millimètres et 0,84 millimètres selon la norme ISO/IEC 7810). Le déplacement des cames d'actionnement 111, 121_jusqu'à cet angle prédéterminé permet de déplacer les volets d'obturation 110, 120 selon une course proportionnelle, de leur position fermée jusqu'à leur position ouverte, de sorte à libérer totalement la fente 13.

Ainsi, lorsque les volets d'obturation 110, 120 sont tous les deux en position ouverte, ils libèrent un espace entre eux sensiblement égal à l'épaisseur de la fente 13. Cet espace est suffisant pour permettre le passage d'une carte à puce 9a.

Si un objet non conforme 9b, de type ticket de métro ou ticket de parking, est inséré dans la fente 13, alors les cames d'actionnement 111, 121 vont pivoter selon un angle de déplacement inférieur à l'angle de déplacement prédéterminé. Le déplacement des cames d'actionnement 111, 121 selon cet angle inférieur à l'angle prédéterminé ne permet donc pas de déplacer les volets d'obturation 110, 120 de leur position fermée jusqu'à leur position ouverte.

En d'autres termes, la course de déplacement des volets d'obturation 110, 120 n'est, dans ce cas, pas suffisante pour libérer entièrement la fente 13, car les volets d'obturation 110, 120 ne laissent aucun espace entre eux, ou bien l'espace libéré est trop faible pour qu'un objet non conforme 9b soit inséré jusqu'au lecteur de carte à puce 2. Les objets non conformes 9b butent donc contre les volets d'obturation 110, 120 et sont empêchés d'atteindre le lecteur de carte à puce 2.

Pour que la fente 13 soit libérée, il faut donc que les deux cames d'actionnement 111, 121 soient actionnées en même temps et par un objet d'une épaisseur suffisante pour permettre l'ouverture totale des volets d'obturation 110 ,120. Dans les autres cas, la fente 13 n'est pas suffisamment libérée pour permettre l'introduction de l'objet non conforme 9b.

La solution proposée permet donc de résoudre le problème technique en empêchant des objets non conformes en termes de largeur et/ou d'épaisseur de pouvoir être introduits jusqu'au lecteur de carte et ainsi d'endommager le dispositif de transaction électronique ou d'en empêcher le fonctionnement.

Selon la technique proposée, le mécanisme d'obturation comprend donc deux ensemble 11, 12 qui sont disposés symétriquement par rapport à un plan horizontal de la fente 13 et qui permettent sélectivement d'obturer et libérer l'accès au lecteur de carte à puce 2 via la fente 13. La présence de ces deux ensembles permet ainsi d'empêcher l'insertion d'objets non conformes, de largeur inférieure à celle d'une carte à puce, de tels objets n'actionnant qu'un seul des deux ensembles lorsqu'ils sont insérés d'un côté ou de l'autre de la fente.

Dans ce mode de réalisation, le volet avant 110 est décalé selon l'axe longitudinal de la fente 13. Plus précisément, le volet avant 110 est situé plus proche de l'extrémité d'introduction de la carte à puce dans la fente 13 que le volet arrière 120. Cette configuration permet notamment d'empêcher l'introduction d'un objet non conforme lorsque les deux volets ne sont pas dans leur position ouverte simultanément.

Ainsi, l'introduction d'un objet 9 présentant une largeur et une épaisseur conforme à une carte à puce 9a (comme illustré sur les figures 5 et 6 notamment) permet d'actionner successivement la deuxième came d'actionnement 121 du volet arrière 120 puis la première came d'actionnement 111 du volet avant 110 de sorte à ouvrir successivement les volets d'obturation 110, 120 et accéder au lecteur de carte à puce 2.

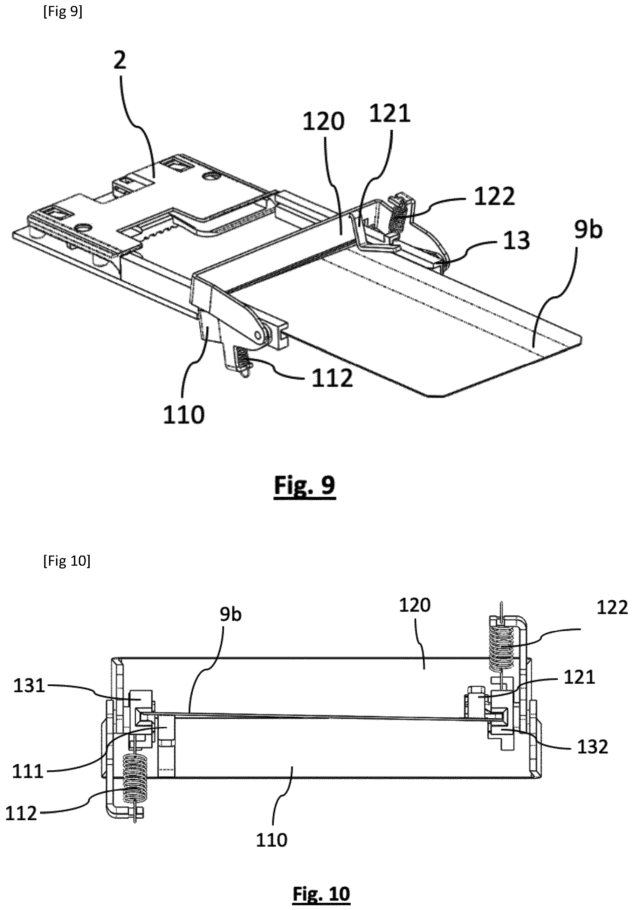

Nous décrivons ici plus précisément le fonctionnement des premier et deuxième ensemble 11, 12 dans le cas d'une tentative d'insertion d'un objet non conforme 9b présentant une épaisseur inférieure à celle d'une carte à puce 9a (un ticket de parking comme illustré sur les figures 9 et 10 par exemple).

Comme décrit précédemment, la présente solution empêche les deux volets de s'ouvrir complètement. Ainsi, un tel objet non conforme 9b est forcé à s'insérer de travers/en biais dans la fente 13 du fait des efforts antagonistes des ressorts de rappels 112, 122 des cames d'actionnement 111, 121. En effet, l'épaisseur de l'objet non conforme 9b n'étant pas suffisante, ce dernier va glisser sur les cames d'actionnement 111, 121 et va donc s'insérer de travers dans la fente 13.

Dans cette situation, illustrée sur la figure 10 notamment, on observe que l'objet non conforme 9b s'est déplacé le long de la première came d'actionnement 111 et vers le haut. L'objet non conforme 9b a donc été forcé à s'incliner dans la fente 13. Cette position inclinée ne permet pas d'actionner suffisamment les cames d'actionnement 112, 121 des volets avant 110 et arrière 120, lesquels ne s'ouvrent donc pas suffisamment pour laisser passer l'objet non conforme 9b.

En résumé, l'action des ressorts de rappel 112, 122 sur les cames 111, 121 renforce l'inclinaison de l'objet non conforme 9b dans la fente 13. En effet, chacun des ressorts 112, 122, applique un effort antagoniste sur l'objet non conforme 9b. Par exemple, sur la figure 10, le ressort 112 applique un effort vers le haut sur le côté gauche de l'objet non conforme 9b alors que le ressort 122 applique un effort vers le bas sur le côté droit de l'objet non conforme 9b.

Lorsque l'objet non conforme 9b poursuit son avancement dans la fente 13, il se trouve donc toujours de travers et son action sur les cames d'actionnement 111, 121 n'est donc ni optimale, ni suffisante pour permettre d'actionner les cames d'actionnement 111, 121 selon l'angle prédéterminé suffisant pour ouvrir les volets 110 ,120.

L'objet non conforme 9b va donc buter contre au moins l'un des volets d'obturation avant 110 ou arrière 120, ce qui empêche son avancement.

Par ailleurs, lorsqu'un objet non conforme 9b introduit dans la fente 13 présente une faible rigidité (un ticket de parking ou de métro en carton ou en papier, par exemple), il n'est pas non plus capable de déplacer les cames d'actionnement 111, 121 qui sont maintenues par les ressorts de rappel 112, 122. En effet, la faible rigidité de l'objet non conforme 9b ne va pas permettre de contrer la force de rappel du ressort de maintien 112, 122. Ainsi, l'ouverture des volets d'obturation 110, 120 n'est pas possible.

La solution proposée permet donc de résoudre le problème technique en empêchant des objets non conformes en termes d'épaisseur et/ou de rigidité de pouvoir être introduits jusqu'au lecteur de carte 2 et ainsi d'endommager le dispositif de transaction électronique ou d'en empêcher le fonctionnement.

En outre, la fente 13 présente une hauteur/épaisseur adaptée pour permettre l'introduction d'une carte à puce. Plus précisément, la hauteur de la fente 13 est d'au moins 0,84 mm (conformément à la norme ISO/IEC7810). Plus précisément, la hauteur de la fente 13 est comprise entre 0,84 et 1mm.

La largeur de la fente 13 est également adaptée pour permettre l'introduction d'une carte à puce. Plus précisément, la largeur de la fente 13 est d'au moins 54,18 mm. Préférentiellement, la largeur de la fente 13 est comprise entre 54,18 et 56 mm.

Ainsi, un objet non conforme 9b présentant une épaisseur et/ou une largeur supérieure(s) aux dimensions de la fente 13 ne peut pas être introduit dans cette dernière.

La technique proposée permet donc, grâce au mécanisme 11, 12 d'obturation de la fente 13, de détecter la largeur et l'épaisseur de l'objet 9 introduit de sorte à sélectivement autoriser ou non l'ouverture des volets d'obturation 110, 120.

En effet, la détection de la largeur de l'objet 9 s'effectue d'une part par la largeur de la fente 13 qui empêche les objets non conformes 9b, plus larges, d'être insérés et d'autre part par la mise en œuvre des cames d'actionnement 111, 121 au niveau de chaque bord de la fente 13 qui permet d'empêcher l'ouverture des volets d'obturation 110, 120 lorsque l'objet 9 n'est pas suffisamment large.

La détection de l'épaisseur s'effectue quant à elle d'une part du fait de la hauteur de la fente 13 qui bloque les objets non conformes 9b, trop épais, et d'autre part via les cames d'actionnement 111, 121 et les volets d'obturation 110, 120 qui s'ouvrent successivement et dans deux directions opposées, ce qui permet de bloquer un objet non conforme 9b présentant une épaisseur inférieure à celle d'une carte à puce 9a.

Les **figures 7 et 8** illustrent un exemple de la technique proposée dans lequel un objet non conforme 9b, dans cet exemple un ticket de métro, est introduit dans la fente 13.

Comme illustré, le ticket de métro 9b présente une largeur sensiblement inférieure à la largeur de la fente 13. Ainsi, le ticket de métro 9b se trouve dans l'incapacité d'actionner les deux cames d'actionnement 111, 121 en même temps.

Dans cet exemple, sur la figure 7, le ticket de métro 9b est inséré au niveau du bord droit de la fente 13. Le ticket de métro 9b n'actionne donc que la deuxième came d'actionnement 121 du volet arrière 120.

De ce fait, le volet avant 110 reste en position fermée et le ticket de métro 9b vient buter contre le volet avant 110. L'introduction du ticket de métro 9b dans la fente 13, jusqu'au lecteur de carte à puce 2, est donc empêchée.

Sur la figure 8 en revanche (sur laquelle le lecteur de carte a été retourné par rapport à la figure 7), le ticket de métro 9b est introduit de l'autre côté de la fente 13 et n'actionne que la première came d'actionnement 111 du volet avant 110. Ainsi, le volet avant 110 s'ouvre mais le ticket de métro 9b bute contre le volet arrière 120. En effet, étant donné que la deuxième came d'actionnement 121 n'est pas actionnée, le volet arrière 120 reste en position fermée. L'introduction du ticket de métro 9b dans la fente 13, jusqu'au lecteur de carte à puce 2, est donc empêchée.

Selon un autre exemple (non illustré), si le ticket de métro 9b était introduit au centre de la fente 13, c'est-à-dire entre les deux cames d'actionnement 111, 121, alors aucune des cames d'actionnement 111, 121 ne serait actionnée et aucun des volets d'obturation 110, 120 ne serait donc ouvert. Le ticket de métro 9b viendrait donc directement buter contre le volet avant 110 et serait empêché d'atteindre le lecteur de carte à puce 2.

Les **figures 9 à 13** illustrent un exemple de la technique proposée dans lequel un objet non conforme 9b, dans cet exemple un ticket de parking, est introduit dans la fente 13.

Comme illustré, le ticket de parking 9b présente une largeur conforme à la largeur de la fente 13, c'est-à-dire sensiblement identique à la largeur d'une carte à puce 9a. Toutefois, le ticket de parking 9b présente une épaisseur et une rigidité sensiblement inférieures à celles d'une carte à puce 9a.

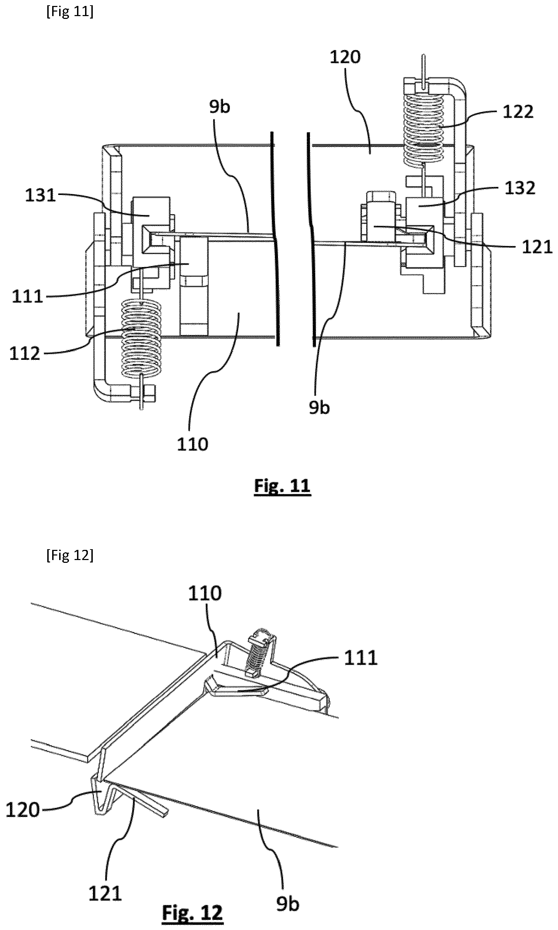

Comme décrit précédemment, lorsque le ticket de parking 9b est inséré dans la fente 13, il entre en contact simultanément avec les deux cames d'actionnement 111 et 121. Cependant, du fait de sa faible épaisseur et sa faible rigidité, il ne les actionne pas suffisamment pour qu'elles entrainent l'ouverture des volets d'obturation 110 et 120. De plus, les ressorts de rappel 112 et 122 vont appliquer leurs efforts antagonistes sur chacun des côtés du ticket de parking 9b, entrainant son inclinaison (comme illustré sur les figures 10 et 11) et donc l'actionnement insuffisant des cames 111, 121.

La technique proposée permet donc de détecter et d'empêcher l'introduction d'un objet non conforme 9b dans la fente 13.

## Revendications

1. Dispositif (1) de transaction électronique comprenant un lecteur de carte à puce (2) et un mécanisme d'obturation (11, 12) d'une fente (13) d'introduction d'une carte à puce (9a) jusqu'audit lecteur de carte à puce (2), ledit mécanisme (11, 12) comprenant un premier volet d'obturation (110) et un deuxième volet d'obturation (120) de ladite fente (13), lesdits volets d'obturation (110, 120) pouvant prendre une position fermée empêchant l'introduction d'un objet non conforme (9b) dans ladite fente (13) jusqu'audit lecteur de carte à puce (2) et une position ouverte permettant l'introduction de ladite carte à puce (9a) dans ladite fente (13) jusqu'audit lecteur de carte à puce (2), **caractérisé en ce que** ladite fente (13) est formée par au moins deux rails latéraux de guidage (131, 132) de ladite carte à puce (9a), et **en ce que** lesdits volets d'obturation (110, 120) comprennent chacun un élément d'actionnement (111, 121) situé respectivement à proximité d'un desdits deux rails latéraux de guidage (131, 132) de ladite fente (13).

2. Dispositif (1) de transaction électronique selon la revendication 1, **caractérisé en ce que** lesdits éléments d'actionnement (111, 121) sont mis en œuvre en opposition l'un par rapport à l'autre selon un plan horizontal de ladite fente (13) et **en ce que** ledit premier volet (110) se déplace de ladite position fermée vers ladite position ouverte selon une première direction et **en ce que** ledit deuxième volet (120) se déplace de ladite position fermée vers ladite position ouverte selon une deuxième direction, opposée à ladite première direction.

3. Dispositif (1) de transaction électronique selon l'une des revendications 1 à 2, **caractérisé en ce que** lesdits éléments d'actionnement (111, 121) se présentent sous la forme d'une première came d'actionnement (111) et d'une deuxième came d'actionnement (121) respectivement solidaires desdits premier (110) et deuxième (120) volets d'obturation.

4. Dispositif (1) de transaction électronique selon l'une des revendications 1 à 3, **caractérisé en ce que** la course de déplacement desdits volets d'obturation (110, 120) est fonction de l'épaisseur de ladite carte à puce (9a) introduite ou dudit objet non conforme (9b) introduit.

5. Dispositif (1) de transaction électronique selon l'une des revendications 1 à 4, **caractérisé en ce que** lesdits deux volets d'obturation (110, 120) prennent leur position ouverte lorsque lesdits éléments d'actionnement (111, 121) sont actionnés simultanément et selon un angle de déplacement prédéterminé

6. Dispositif (1) de transaction électronique selon l'une des revendications 1 à 5, **caractérisé en ce que** lesdits volets d'obturation (110, 120) comprennent chacun un ressort de rappel (112, 122).

7. Dispositif (1) de transaction électronique selon la revendication 1, **caractérisé en ce que** ladite fente (13) présente des dimensions sensiblement identiques aux dimensions standards d'une carte à puce (9a).

## Patentansprüche

1. Elektronische Transaktionsvorrichtung (1), umfassend ein Chipkartenlesegerät (2) und einen Mechanismus zum Verschließen (11, 12) eines Schlitzes (13) zum Einführen einer Chipkarte (9a) bis zum Chipkartenlesegerät (2), wobei der Mechanismus (11, 12) eine erste Klappe zum Verschließen (110) und eine zweite Klappe zum Verschließen (120) des Schlitzes (13) umfasst, wobei die Klappen zum Verschließen (110, 120) eine geschlossene Position, die das Einführen eines nicht konformen Objekts (9b) in den Schlitz (13) bis zum Chipkartenlesegerät (2) verhindert, und eine geöffnete Position, die das Einführen der Chipkarte (9a) in den Schlitz (13) bis zum Chipkartenlesegerät (2) gestattet, einnehmen können, **dadurch gekennzeichnet, dass** der Schlitz (13) von wenigstens zwei seitlichen Schienen (131, 132) zum Führen der Chipkarte (9a) gebildet ist, und dadurch, dass die Klappen zum Verschließen (110, 120) jede ein Betätigungselement (111, 121) umfassen, das sich jeweils in der Nähe einer der zwei seitlichen Führungsschienen (131, 132) des Schlitzes (13) befindet.

2. Elektronische Transaktionsvorrichtung (1) nach Anspruch 1, **dadurch gekennzeichnet, dass** die Betätigungselemente (111, 121) gemäß einer horizontalen Ebene des Schlitzes (13) einander gegenüber eingerichtet sind, und dadurch, dass die erste Klappe (110) sich aus der geschlossenen Position in die geöffnete Position gemäß einer ersten Richtung bewegt, und dadurch, dass die zweite Klappe (120) sich aus der geschlossenen Position in die geöffnete Position gemäß einer zweiten Richtung, bewegt, die der ersten Richtung entgegengesetzt ist.

3. Elektronische Transaktionsvorrichtung (1) nach einem der Ansprüche 1 bis 2, **dadurch gekennzeichnet, dass** die Betätigungselemente (111, 121) als eine erste Betätigungsnocke (111) und als eine zweite Betätigungsnocke (121) ausgebildet sind, die mit der ersten Klappe zum Verschließen (110) bzw. der zweiten Klappe zum Verschließen (120) fest verbunden sind.

4. Elektronische Transaktionsvorrichtung (1) nach einem der Ansprüche 1 bis 3, **dadurch gekennzeichnet, dass** der Bewegungshub der Klappen zum Verschließen (110, 120) von der Dicke der eingeführten Chipkarte (9a) oder des eingeführten nicht konformen Objekts (9b) abhängig ist.

5. Elektronische Transaktionsvorrichtung (1) nach einem der Ansprüche 1 bis 4, **dadurch gekennzeichnet, dass** die zwei Klappen zum Verschließen (110, 120) ihre geöffnete Position einnehmen, wenn die Betätigungselemente (111, 121) gleichzeitig und gemäß einem vorbestimmten Bewegungswinkel betätigt werden.

6. Elektronische Transaktionsvorrichtung (1) nach einem der Ansprüche 1 bis 5, **dadurch gekennzeichnet, dass** die Klappen zum Verschließen (110, 120) jede eine Rückstellfeder (112, 122) umfassen.

7. Elektronische Transaktionsvorrichtung (1) nach Anspruch 1, **dadurch gekennzeichnet, dass** der Schlitz (13) Abmessungen aufweist, die mit den Standardabmessungen einer Chipkarte (9a) im Wesentlichen identisch sind.

## Claims

1. Electronic transaction device (1) comprising a smart card reader (2) and a mechanism (11, 12) for closing a slot (13) for introducing a smart card (9a) to said smart card reader (2), said mechanism (11, 12) comprising a first closing flap (110) and a second closing flap (120) for said slot (13), said closing flaps (110, 120) being able to adopt a closed position preventing the introduction of a non-compliant object (9b) into said slot (13) up to said smart card reader (2) and an open position allowing the introduction of said smart card (9a) into said slot (13) up to said smart card reader (2), **characterized in that** said slot (13) is formed by at least two lateral guide rails (131, 132) for said chip card (9a), and **in that** said closing flaps (110, 120) each comprise an actuating element (111, 121) located respectively close to one of said two lateral guide rails (131, 132) of said slot (13).

2. Electronic transaction device (1) according to claim 1, **characterized in that** said actuating elements (111, 121) are implemented in opposition to each other along a horizontal plane of said slot (13) and **in that** said first flap (110) moves from said closed position towards said open position along a first direction and **in that** said second flap (120) moves from said closed position towards said open position along a second direction, opposite to said first direction.

3. Electronic transaction device (1) according to one of claims 1 to 2, **characterized in that** said actuating elements (111, 121) are in the form of a first actuating cam (111) and a second actuating cam (121) respectively integral with said first (110) and second (120) closing flaps.

4. Electronic transaction device (1) according to one of claims 1 to 3, **characterized in that** the displacement travel of said closing flaps (110, 120) is a function of the thickness of said inserted chip card (9a) or said inserted non-compliant object (9b).

5. Electronic transaction device (1) according to one of claims 1 to 4, **characterized in that** said two closing flaps (110, 120) assume their open position when said actuating elements (111, 121) are actuated simultaneously and according to a predetermined displacement angle.

6. Electronic transaction device (1) according to one of claims 1 to 5, **characterized in that** said closing flaps (110, 120) each comprise a return spring (112, 122).

7. Electronic transaction device (1) according to claim 1, **characterized in that** said slot (13) has dimensions substantially identical to the standard dimensions of a smart card (9a).
